# EUROPEAN PATENT APPLICATION

(11) **EP 1 302 099 A2**
(43) Date of publication of application: **16.04.2003**
(21) Application number: 02022413.5
(22) Date of filing: 04.10.2002
(51) Int. Cl.: A01G 9/12

(54) **Gardening ornament frame**

(30) Priority: 12.10.2001 DE 20116829 U
(71) Applicant: Lin, Chen-Hsiung, Gia Yi City (TW)
(72) Inventor: Lin, Chen-Hsiung, Gia Yi City (TW)
(74) Representative: Panten, Kirsten

(57) **Abstract**

The present invention relates to a gardening ornamental frame (1). The frame comprises a first half netting and a second half netting which engage with one another. At least one hollow leg is disposed at the bottom of each of the half nettings. The first hollow legs and the second hollow legs have a bottom openings (11,11').

Preferably the frames have the form of an animal, a mammal or a bird, for example a giraffe.

Plants (3) may be planted into the earth and grow through the hollow legs.

## Description

The present invention relates to a gardening ornamental frame.

Ornamental frames for horticulture are yet known. A disadvantage of these presently known ornamental frames is that these ornamental frames look like a foreign body in the garden. Furthermore, the cost for producing these frames are very high and therefore they are not suited as a mass produced article.

An object of the present invention is to provide a gardening ornamental frame which may be ethetically be integrated in the garden and which is producable at lower costs.

The problem is solved by a gardening ornamental frame providing the features according to claim 1.

The inventive gardening frame may confine a plurality of plants. However, because of the hollow legs even plants which need a greater volume of substrate may be confined in the gardening ornamental frame. The plants may be planted in the earth and grow within the gardening ornamental frame.

The gardening ornamental frames may have various forms especially preferred are animals like mammals or birds.

In the following features and advantages of the present invention are discussed by example of two embodiments in respect of the accompanying drawings:
FIG. 1 is a perspective assembly view of a gardening ornamental frame of a first preferred embodiment in accordance with the present invention;
FIG. 1A is a perspective view of a bottom opening of a leg of the first preferred embodiment in accordance with the present invention;
FIG. 2 is a perspective exploded view of a gardening ornament frame of the first preferred embodiment in accordance with the present invention;
FIG. 3 is a schematic view illustrating an application of a gardening ornamental frame of the first preferred embodiment in accordance with the present invention;
FIG. 4 is a perspective assembly view of a gardening ornamental frame of the first preferred embodiment in accordance with the present invention;
FIG. 4A is a perspective view of a bottom opening of a leg of a second preferred embodiment in accordance with the present invention;
FIG. 5 is a perspective exploded view of a gardening ornament frame of the second preferred embodiment in accordance with the present invention; and
FIG. 6 is a schematic view illustrating an application of a gardening ornamental frame of the second preferred embodiment in accordance with the present invention.

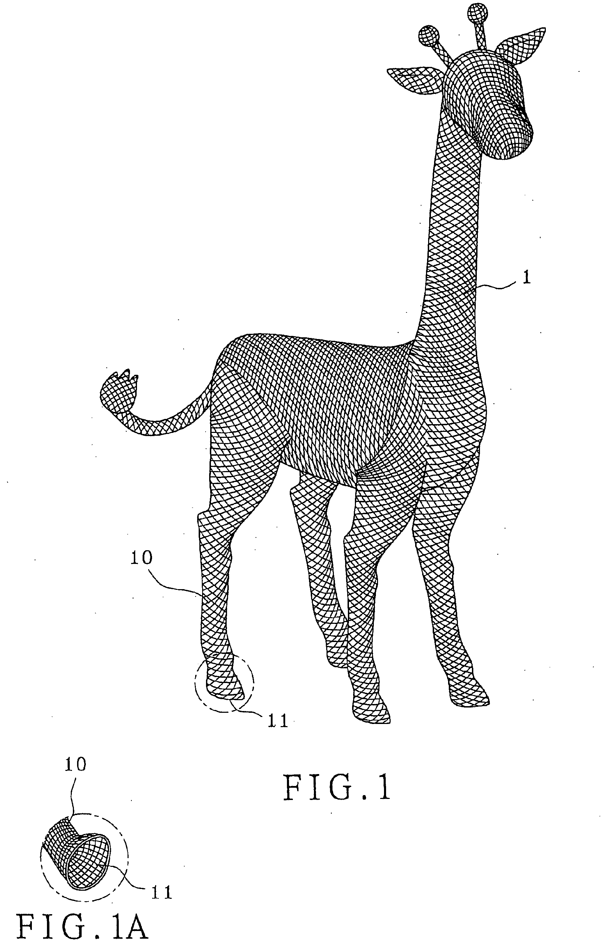

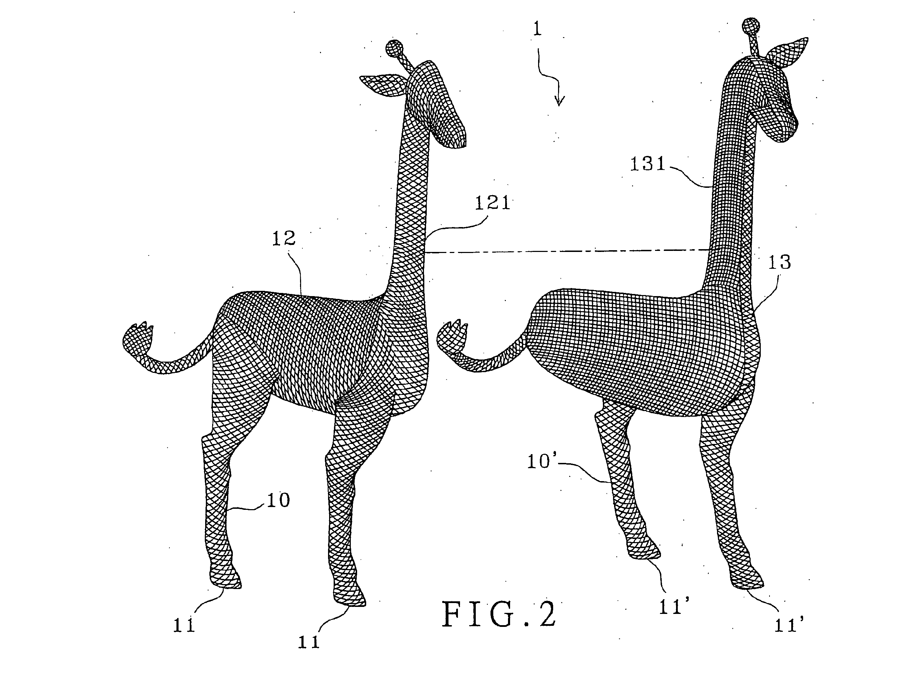

Referring to FIGS. 1 to 3, a first gardening ornamental frame 1 in the form of a giraffe comprises a first half netting 12, a second half netting 13 engaging with the first half netting 12. Two first hollow legs 10 are disposed at the bottom of the first half netting 12, and the second hollow legs 10' are disposed at the bottom of the second half netting 13.

The first half netting 12 has a first periphery 121. The second half netting 13 has a second periphery 131. Each of the first hollow legs 10 has a first bottom opening 11 and each of the second hollow legs 10' has a second bottom opening 11'.

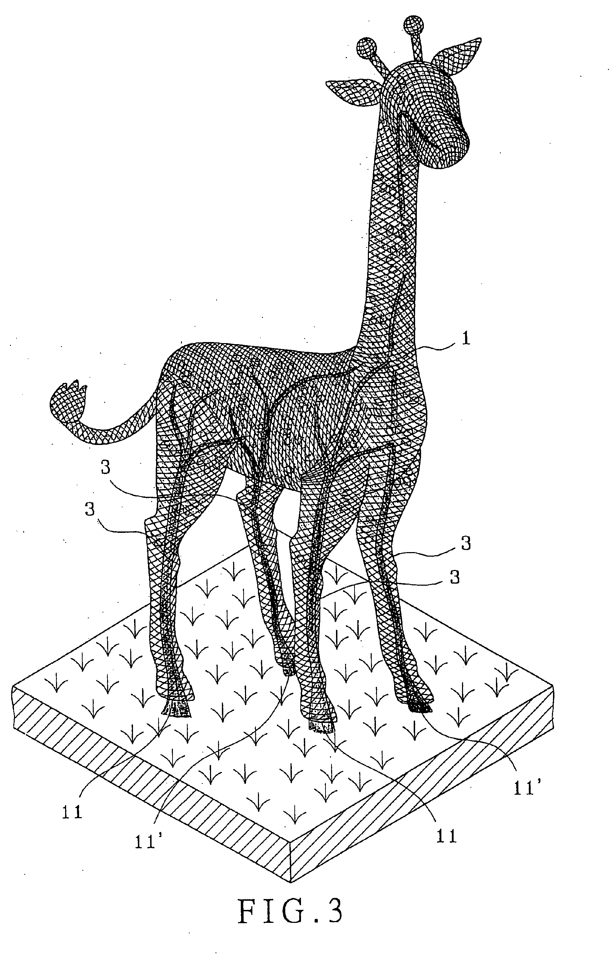

Referring to FIG. 3 again, a plurality of plants 3 are inserted in the first hollow legs 10 and the second hollow legs 10'.

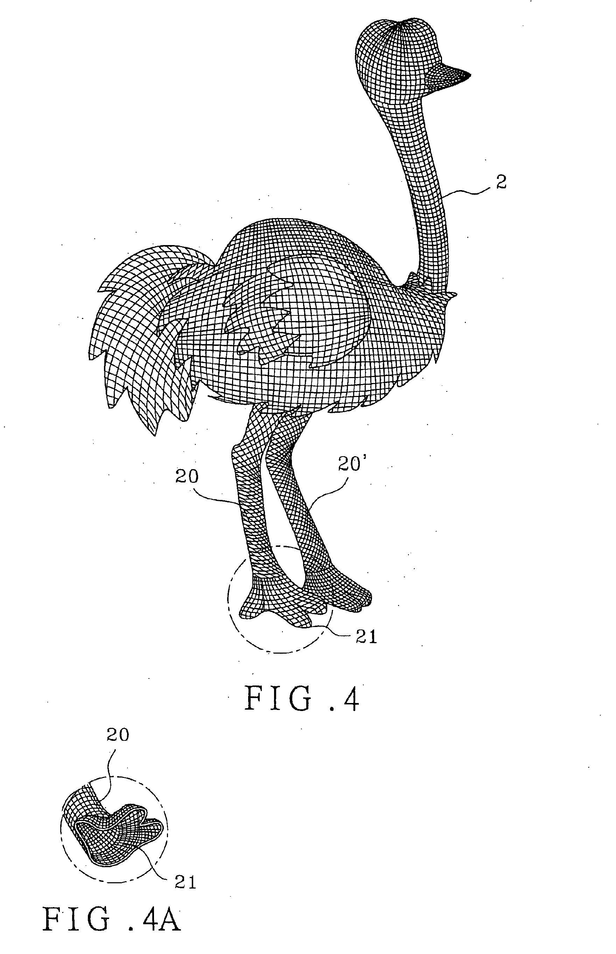

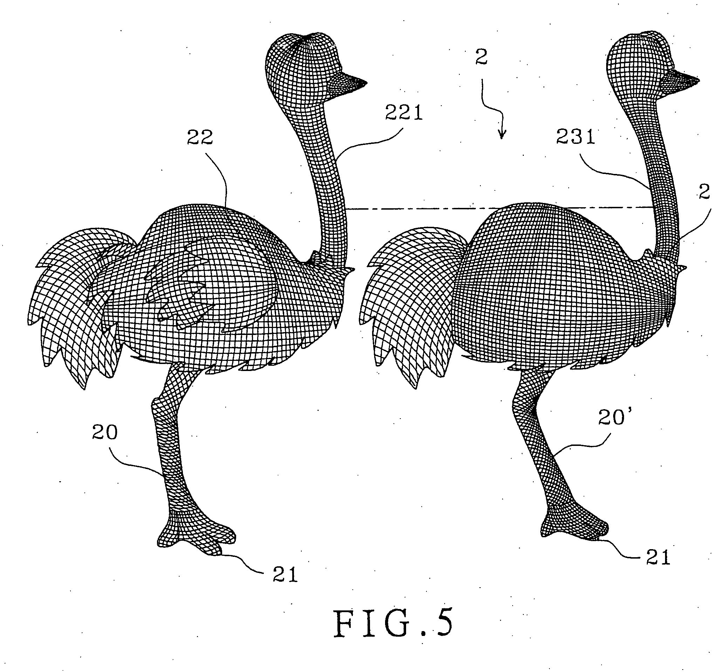

Referring to FIGS. 4 to 6, a second gardening ornament frame 2 in the form of an ostrich comprises a first half netting 22, a second half netting 23 engaging with the first half netting 22, a first hollow leg 20 disposed at the bottom of the first half netting 22, and a second hollow leg 20' disposed at the bottom of the second half netting 23.

The first half netting 22 has a first periphery 221. The second half netting 23 has a second periphery 231. The first hollow leg 20 has a first bottom opening 21. The second hollow leg 20' has a second bottom opening 21'.

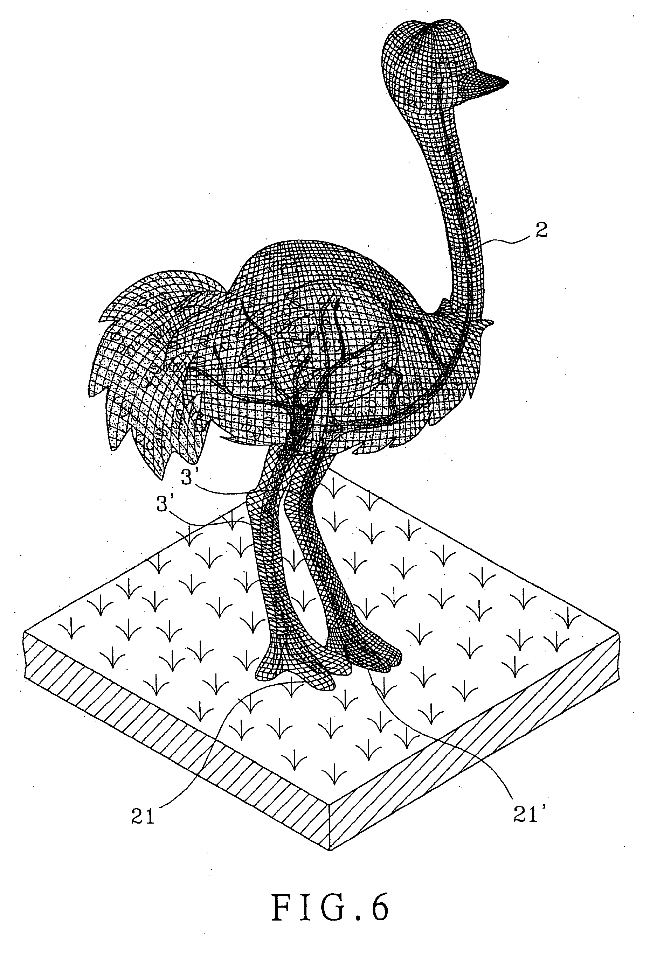

Referring to FIG. 6 again, a plurality of plants 3' are inserted into the first hollow leg 20 and the second hollow leg 20'.

## Claims

1. A gardening ornamental frame (2)
**characterized by**
a first half netting (12;22) and a second half netting (13;23), wherein the second half netting (13;23) engages with the first half netting (12;22),
at least one first hollow leg (10;20) disposed at the bottom of the first half netting (12;22),
at least a second hollow leg (10';20') disposed at the bottom of the second half netting (13;23),
the first half netting (12;22) having a first periphery (121;221),
the second half netting (13;23) having a second periphery (131;231),
the first hollow legs (10;20) having a first bottom opening (11;21), and
the second hollow legs (10';20') having a second bottom opening (11';21').

2. The gardening ornamental frame according to claim 1, **characterized in that** two first hollow legs (10) are disposed at the bottom of the first half netting (12) and two second hollow legs (10') are disposed at the bottom of the second half netting (13).

3. The gardening ornamental frame according to claim 2, **characterized in that** it has the form of a giraffe.

4. The gardening ornamental frame according to claim 1, **characterized in that** one first hollow leg (20) is disposed at the bottom of the first half netting (22) and one second hollow leg (20') is disposed at the bottom of the second half netting (23).

5. The gardening ornamental frame according to claim 4, **characterized in that** it has the form of an ostrich.
